# EUROPEAN PATENT SPECIFICATION

(11) **EP 3 079 461 B1**
(45) Date of publication and mention of the grant of the patent: **03.07.2019**
(21) Application number: 14808680.4
(22) Date of filing: 20.10.2014
(51) Int. Cl.: A01J 5/007, A01J 5/013, A01K 15/04, H04N 5/33, A01K 1/00, A01K 1/12, A01K 29/00

(54) **AUTOMATED MILKING STALL**
AUTOMATISIERTER MELKSTAND
STALLE DE TRAITE AUTOMATISÉE

(30) Priority: 22.10.2013 GB 201318641
(43) Date of publication of application: 19.10.2016
(73) Proprietor: R.J. FULLWOOD & BLAND LIMITED, Ellesmere Shropshire SY12 9DF (GB)
(72) Inventor: LANCASTER, John Richard, Shrewsbury Shropshire SY4 3AN (GB)
(74) Representative: Bartle Read
(86) International application number: PCT/GB2014/000426
(87) International publication number: WO 2015/059439

(56) References cited:
- EP-A2- 0 567 191
- WO-A1-2011/102717
- WO-A1-2014/189449
- NZ-A- 580 383
- US-A- 5 784 994

## Description

### BACKGROUND TO THE INVENTION

### 1 FIELD OF THE INVENTION

The present invention relates to an automated milking stall for animals such as cattle, goats and the like.

### 2. DESCRIPTION OF RELATED ART

Such milking stalls or parlours are known *per se* and comprise an entry gate via which the animal will enter the parlour and which is closed during milking to retain the animal in the parlour; an exit gate which opens automatically when milking has ended and a robot arm which carries, at its distal end, teat cups. The robot arm is automatically movable into (and, when milking is finished, out of) a position in which the teat cups may engage with the teats of the animal.

Automated milking parlours are also known to comprise or be linked to various analysis equipment whose purpose is to record and analyse parameters associated with both the milking process and the milk yielded by that process. The purposes of such analyses include the obtaining of data on the individual animal's milk yield as well as to establish whether the animal is, at the time of milking, displaying indications of illness requiring intervention and/or withhold of its milk from human consumption. The process of automation in animal milking is known to use data obtained during milking which indicates illness then to segregate the unwell animal. Typically, this will involve herding the animal, once it has exited the milking parlour, into a separate compound using an automated gate. Alternatively, the animal may be segregated for routine attention on the instruction of the operator. WO2014/189449 discloses a milking stall arranged to house one animal at a time having a fence arrangement WO 2011/102717 A1 discloses a milking box having two entrance fences and two exit fences.

### SUMMARY OF THE INVENTION

The present invention provides a milking stall according to claim 1. In a preferred embodiment, the stall comprises a control system which is operable to actuate the first exit gate when a signal is received indicating that the animal is unwell or otherwise required for individual attention and to actuate the second exit gate when a signal is received indicating there is no requirement to segregate.

### BRIEF DESCRIPTION OF DRAWINGS

Embodiments of the invention will now be described, by way of example, and with reference to the accompanying drawings, in which:
Fig. 1 is a perspective view of an embodiment of milking stall according to the present invention;
Fig. 2 is a plan view of the embodiment of Fig. 1;
Fig. 3 is a plan view of a detail of Figs. 1 and 2;
Figs. 4 to 7 are plan views of different modes of operation of the embodiment of milking stall according to the present invention; and
Fig. 8 is a schematic illustration of control of the exits to the embodiment of milking stall in Figs. 1 to 7.

### DESCRIPTION OF PREFERRED EMBODIMENTS

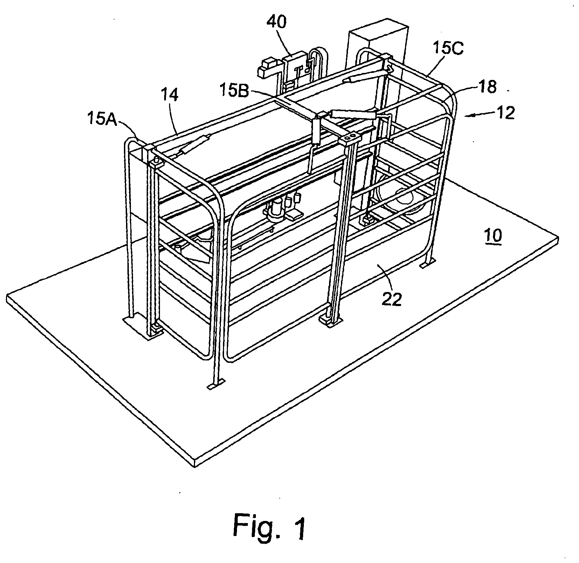

Referring now to Figs. 1 to 3, an automated milking stall for comprises a planar base 10 and, mounted upon the base, a pen 12. In the present embodiment the stall is designed for milking cattle, though this is not essential. The pen 12 is rectangular in plan view and comprises a wall 14 which forms one of the longer sides of the enclosure. The wall 14 extends from the upper level of the enclosure to about halfway down, thereby leaving a substantial gap at the bottom. The gap enables a robotically-controlled arm 40 to swing under the wall 14 and engage with a cow's udder for automated milking as will be described subsequently.

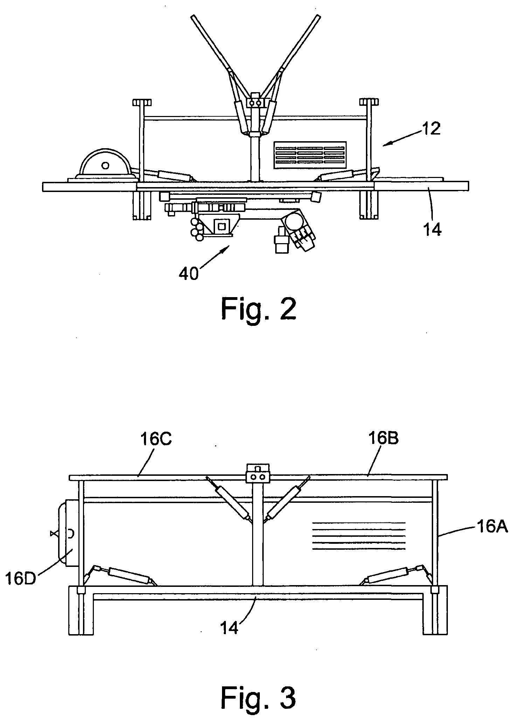

The remaining sides of the pen 12 are provided by a series of gate sections 16A, B, C D (shown most readily in Fig. 3). Each gate section 16 is mounted to a rectangular frame 15A,B,C situated at the ends and the middle of the pen 12. Each gate section 16 comprises a substantially rectangular frame 18 made of tubular spars, typically of galvanised steel though any suitable material may be used. A series transverse struts 20, also made of tubular galvanised steel extend across each frame 18, with the lowermost strut 18 of each gate section 16 and the adjacent parts of the frame 18 each supporting a panel 22. The panels 22 extend transversely around the lowermost part of the three sides of the pen 12 enclosed by the gate sections 16 and serve to avoid or minimise damage to an animal's lower leg in the event that it starts to kick while in the enclosure.

The size of the pen is chosen so that, when an animal is enclosed within the pen 12 its movement is significantly restricted and, as a consequence of which, its udder will be known to be located within a very small area. Once enclosed, this enables a robotic arm, mounted to the remote side of the wall 14 (Fig. 1) to articulate under the wall 14 and to engage with the teats of the cow's udder. Once engaged, milk is extracted from the teats via milk cups (not shown) on the robotic arm into a milk receptacle (not shown) and mounted to the far side of the wall 14. Typically, milk either within the receptacle or which is being transmitted to it will be analysed physically and/or chemically for one or more 'marker' measurements which indicate animal illness. In the event that illness is indicated, it will be desirable to segregate the animal from the remainder of the herd both to prevent any possible spread of illness and to ensure the animal may receive appropriate treatment.

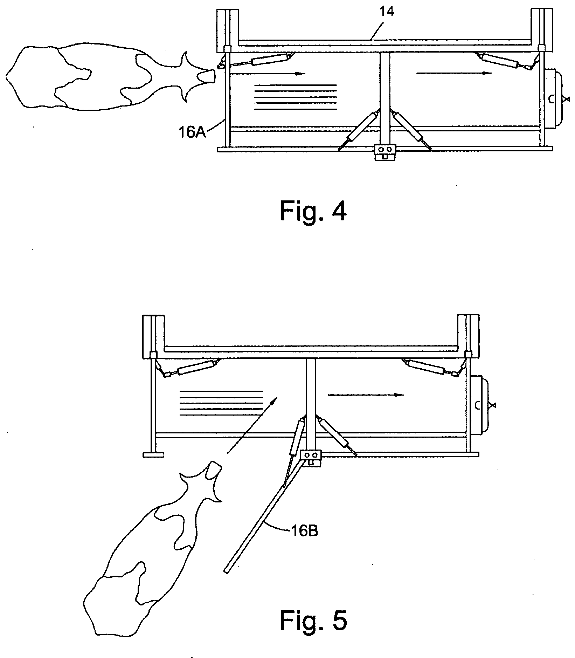

Referring now additionally to Figs 4 and 5, in a preferred embodiment two entry gates, 16A, B are pivotally mounted to a end frame 15A for a hinged motion relative to the base 10 thereby providing two alternative entry locations into the milking stall. Thus, gate section 16A is pivotally mounted to a vertical strut 22 forming part of frame 15A in a manner permitting hinged opening of the gate section 16A to allow a cow 'straight entry' into the stall, as shown in Fig. 4. Similarly, gate section16B is pivotally mounted to the centre frame 15B for hinged opening which therefore permits entry into the stall of cattle from a different direction. The stall likewise comprises two exit gates. Thus, gate section 16C is pivotally mounted for hinged opening from middle frame 15B, while gate section 16D is pivotally mounted for hinged opening from end frame 15C. Thus, by means of two differing entry gates, it is possible to select cattle for milking from one of two different animal compounds, for example, and to direct them to one of two different exit compounds. Thus, Fig. 4 illustrates entry via gate 16A which may open onto a first compound; while Fig. 5, illustrating entry via gate 16B, may open onto a second, distinct compound.

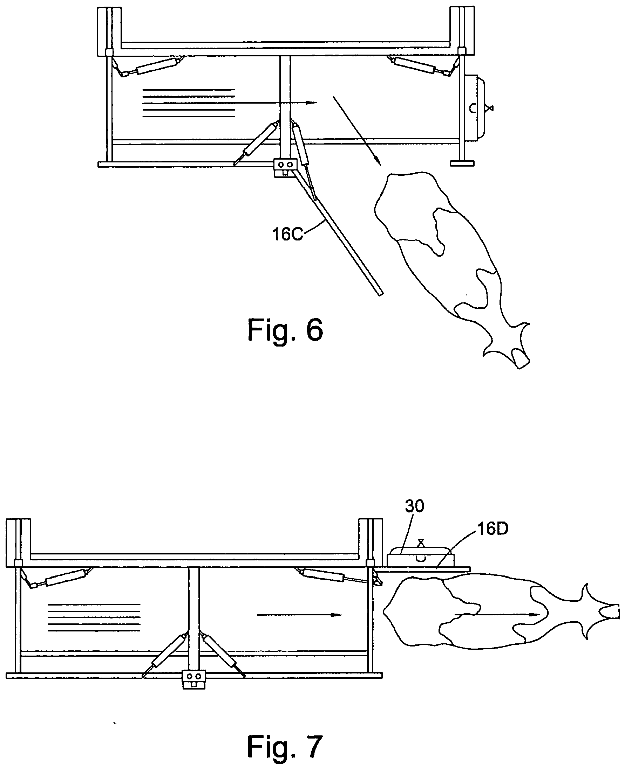

Referring additionally to Figs. 6 and 7, equally, exit may be via gate 16C as illustrated in Fig. 6; or via gate 16D as illustrated in Fig. 7. If, therefore, it transpires that a cow is diagnosed from the analysis of its milk as showing indications of illness and/or is required for routine operator attention, it can be forced to exit the stall by (say) the gate 16C which opens onto a compound that is entirely separate to the compound onto which ordinary exit gate 16D opens and therefore provides instant and complete segregation of the animal from the moment at which the first indication of the animal's potentially poor health has been detected. Notably, and as illustrated in Figs. 3 to 7, a feed container 30 is preferably located on an exit gate 16D (though the container may equally be located elsewhere in a location accessible by the animal when located inside the pen)

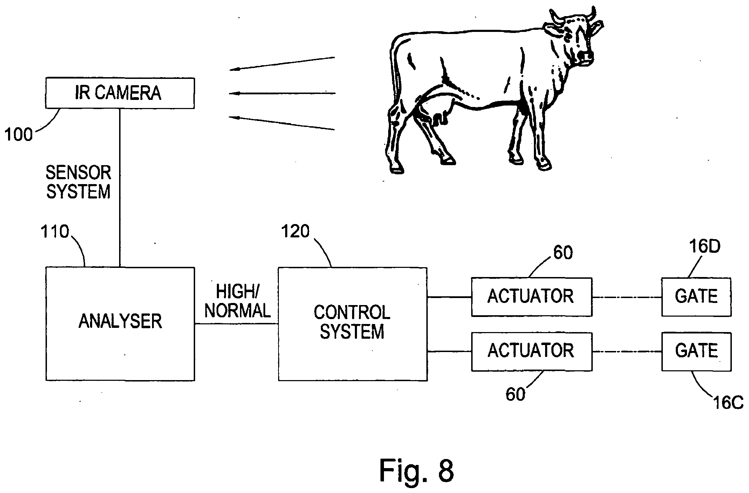

Referring now to Fig. 8, control of the gates may, in one preferred embodiment, be based upon the health of the animal. Thus, according to one embodiment, an infra red camera 100 is located on a frame 15A, B, C and scans the animal whilst it is milking. An IR scan analyser 110 establishes whether the temperature of the animal is within a range which would indicate normal health, or whether the animal's temperature indicates ill-health. The output signal of the scan analyser 110 is sent to the control system 120. If the scan analyser output signals normal health, the control system operates the hydraulic actuator 60 associated with gate 16D and the animal exits the pen of the stall to join the other animals. If, however, the scan analyser output signals ill health, the control system operates the motor on gate 16C and the animal exits to an entirely separate compound without ever, at any subsequent point, coming into contact with any of the other animals. For ease of illustration only a single sensor, here an IR sensor to indicate body temperature, has been shown. It is equally possible to employ a plurality of such sensors; further it is possible to employ sensors of other parameters which indicate animal wellbeing, such as animal contours for body condition scoring and the like. Further, where ill health is to be used as a basis upon which to control the gate operation, it is not essential to use IR-generated animal heat data; alternative data may be used, such as analysis of the milk temperature and/or composition, for example.

Further, the control system may equally operate upon bases other than animal health. Thus, the control system could be pre-programmed with the identities of specific animals which it is desire to segregate for other reasons and, when he RFID of the or each such animal is detected when milking and transmitted to the control system, the control system may operate to divert the animal out of the appropriate exit gate.

In this way the milking stall can be used additionally as an instant filtering mechanism for animal traffic.

## Claims

1. A milking stall comprising a base structure (10) supporting a pen (12) said pen defining a substantially rectangular enclosure comprising two opposing longer sides and two opposing shorter sides within which enclosure an animal undergoing milking may be enclosed, the pen comprising first and second entrance gates (16A, 16B) and first and second exit gates (16C, 16D), each gate being movable between an open position in which an animal may pass through the gate and a closed position in which an animal is unable to do so, wherein one of said longer sides is provided with one entrance gate (16B) and one exit gate (16C), and wherein one of said shorter sides is provided with one entrance gate (16A) and the other one of said shorter sides is provided with one exit gate (16D), the milking stall further comprising a control system (10) for operating the exit gates in dependence upon one or more predetermined signals, and wherein the milking stall comprises at least one analysis device (110) for analysing the condition of the animal during milking and generating a signal accordingly.

2. A milking stall according to claim 1 wherein the first and second exit gates enable exit from the pen at respectively different locations.

3. A milking stall according to claims 1 or 2 wherein the signal is indicative of whether the animal is in good health.

4. A milking stall according to claim 3 wherein the control system operates the first exit gate to allow the animal to exit when the animal is in good health and the second exit gate when the animal is in poor health.

5. A milking stall according to any one of the preceding claims wherein one wall (14) of the pen supports an articulating robot arm (40) on which a milking device is carried and which is automatically controllable to articulate into the pen for the purpose of milking an animal and to articulate out of the pen when milking has finished.

6. A milking stall according to claim 5 wherein the articulating robot arm (40) is adapted to articulate, starting from a position outside of the pen, under the wall into the pen to adopt a milking position.

7. A milking stall according to any one of the preceding claims wherein the control system is operable to open an entrance gate and an exit gate, wherein the control system is adapted to select an exit gate for opening based upon a value of one or more parameters indicating animal health.

## Patentansprüche

1. Melkstand, der als Träger einer Bucht (12) eine Bodenstruktur (10) umfasst, wobei die Bucht eine im Wesentlichen rechteckige, zwei sich gegenüberliegende längere Seiten und zwei sich gegenüberliegende kürzere Seiten umfassende Einhegung begrenzt, in der ein Tier, das gemolken wird, eingeschlossen werden kann, wobei die Bucht ein erstes und ein zweites Eingangstor (16A, 16B) und ein erstes und ein zweites Ausgangstor (16C, 16D) umfasst, wobei die einzelnen Tore zwischen einer geöffneten Position, in der das Tier durch das Tor gehen kann, und einer geschlossenen Position, in der das Tier dies nicht kann, bewegbar sind, wobei eine der längeren Seiten mit einem Eingangstor (16B) und einem Ausgangtor (16C) versehen ist und eine der kürzeren Seiten mit einem Eingangstor (16A) und die andere der kürzeren Seiten mit einem Ausgangstor (16D) versehen ist, wobei der Melkstand ferner ein Steuersystem (10) zum Betätigen der Ausgangstore in Abhängigkeit von einem oder mehreren vorbestimmten Signalen umfasst und wobei der Melkstand zumindest ein Analysevorrichtung (110) zum Analysieren des Zustands des Tiers während des Melkens und Erzeugen eines entsprechenden Signals umfasst.

2. Melkstand nach Anspruch 1, wobei das erste und das zweite Ausgangstor das Verlassen der Bucht an jeweils verschiedenen Orten ermöglichen.

3. Melkstand nach Anspruch 1 oder 2, wobei das Signal angibt, ob die Gesundheit des Tiers gut ist.

4. Melkstand nach Anspruch 3, wobei das Steuersystem das erste Ausgangstor betätigt, um dem Tier das Verlassen zu gestatten, wenn die Gesundheit des Tiers gut ist, und das zweite Ausgangstor, wenn die Gesundheit des Tiers schlecht ist.

5. Melkstand nach einem der vorstehenden Ansprüche, wobei eine Wand (14) der Bucht einen Robotergelenkarm (40) trägt, an dem eine Melkvorrichtung mitgeführt wird und der automatisch steuerbar ist, zum Melken eines Tiers in die Bucht hinein zu fahren und nach Ende des Melkens aus der Bucht heraus zu fahren.

6. Melkstand nach Anspruch 5, wobei der Robotergelenkarm (40) dazu ausgelegt ist, von einer Position außerhalb der Bucht unter der Wand in die Bucht hinein zu fahren, um eine Melkposition einzunehmen.

7. Melkstand nach einem der vorstehenden Ansprüche, wobei das Steuersystem zum Öffnen eines Eingangstors und eines Ausgangstors betreibbar ist, wobei das Steuersystem ausgelegt ist, basierend auf einem oder mehreren, die Tiergesundheit anzeigenden Parametern ein Ausgangstor zum Öffnen auszuwählen.

## Revendications

1. Stalle de traite comprenant une structure de base (10) soutenant un enclos (12), ledit enclos définissant une enceinte sensiblement rectangulaire comprenant deux côtés opposés relativement longs et deux côtés opposés plus courts, enceinte au sein de laquelle un animal soumis à une traite peut être confiné, l'enclos comprenant des premier et second portails d'entrée (16A, 16B) et des premier et second portails de sortie (16C, 16D), chaque portail étant mobile entre une position ouverte dans laquelle un animal peut traverser le portail et une position fermée dans laquelle un animal ne peut pas le faire, au moins un desdits côtés relativement longs étant doté d'un portail d'entrée (16B) et d'un portail de sortie (16C) et l'un desdits côtés plus courts étant doté d'un portail d'entrée (16A) et l'autre desdits côtés plus courts étant doté d'un portail de sortie (16D), la stalle de traite comprenant en outre un système de commande (10) permettant d'actionner les portails de sortie en fonction d'au moins un signal prédéfini, et la stalle de traite comprenant au moins un dispositif d'analyse (110) permettant d'analyser l'état de l'animal pendant la traite et de produire un signal en conséquence.

2. Stalle de traite selon la revendication 1, dans laquelle les premier et second portails de sortie permettent la sortie de l'enclos dans des emplacements respectivement différents.

3. Stalle de traite selon la revendication 1 ou 2, dans laquelle le signal indique si l'animal est en bonne santé.

4. Stalle de traite selon la revendication 3, dans laquelle le système de commande actionne le premier portail de sortie pour permettre à l'animal de sortir lorsque l'animal est en bonne santé et le second portail de sortie quand l'animal est en mauvaise santé.

5. Stalle de traite selon l'une quelconque des revendications précédentes, dans laquelle une paroi (14) de l'enclos soutient un bras articulé robotisé (40) sur lequel est porté un dispositif de traite et qui est réglable automatiquement pour s'articuler dans l'enclos afin de traire un animal et pour s'articuler hors de l'enclos à l'issue de la traite.

6. Stalle de traite selon la revendication 5, dans laquelle le bras articulé robotisé (40) est conçu pour s'articuler, à partir d'une position située en dehors de l'enclos, sous la paroi dans l'enclos afin de prendre une position de traite.

7. Stalle de traite selon l'une quelconque des revendications précédentes, dans laquelle le système de commande peut être actionné pour ouvrir un portail d'entrée et un portail de sortie, le système de commande étant conçu pour sélectionner un portail de sortie à ouvrir en fonction d'une valeur d'au moins un paramètre indiquant l'état de santé de l'animal.
